# EUROPÄISCHE PATENTANMELDUNG

(11) **EP 1 609 964 A2**
(43) Veröffentlichungstag der Anmeldung: **28.12.2005**
(21) Anmeldenummer: 05103931.1
(22) Anmeldetag: 11.05.2005
(51) Int. Cl.: F02B 37/16, F02D 41/22, F02D 23/02

(54) **Verfahren zum Betreiben einer Brennkraftmaschine**

(30) Priorität: 25.06.2004 DE 102004030764
(71) Anmelder: ROBERT BOSCH GMBH, 70442 Stuttgart (DE)
(72) Erfinder: Wild, Ernst, 71739, Oberriexingen (DE); Nau, Michael, 72175, Dornhan/Aischfeld (DE); Wegener, Sabine, 38527, Meine (DE)

(57) **Zusammenfassung**

Es wird ein Verfahren zum Betreiben einer Brennkraftmaschine (1) mit einem Verdichter (45) in einer Luftzufuhr (10) der Brennkraftmaschine (1) und einem Bypasskanal (25) um den Verdichter (45) mit einem Bypassventil (30) vorgeschlagen, das eine Diagnose des Bypassventils (30) ermöglicht, ohne das die Verwendung eines Luftmassenmessers in der Luftzufuhr (10) erforderlich ist. In mindestens einem Betriebsbereich der Brennkraftmaschine (1) wird bei einem definiert aufgebauten Ladedruck das Bypassventil (30) zumindest teilweise geöffnet. Ein Fehler wird erkannt, wenn der Ladedruckabfall beim Öffnen des Bypassventils (30) betragsmäßig unter einem vorgegebenen Schwellwert bleibt.

## Beschreibung

### Stand der Technik

Die Erfindung geht von einem Verfahren zum Betreiben einer Brennkraftmaschine nach der Gattung des Hauptanspruchs aus.

Es sind bereits Brennkraftmaschinen mit einem Verdichter in einer Luftzufuhr der Brennkraftmaschine und einem Bypasskanal um den Verdichter bekannt, wobei der Bypasskanal ein Bypassventil umfasst. Dabei wird beim Schließen einer Drosselklappe in der Luftzufuhr der Brennkraftmaschine das Bypassventil, das auch als Schubumluftventil bezeichnet wird, geöffnet. Dadurch wird verhindert, dass bei kleinem Luftdurchsatz und hoher Verdichtung der Verdichter in seinen Pumpbereich gelangt. Im Falle der Verwendung eines Abgasturboladers reisst beim Pumpen des Verdichters des Abgasturboladers die Strömung an den Leitschaufeln der Turbine des Abgasturboladers ab und der Ladedruck bricht zusammen, um sich dann anschließend erneut aufzubauen. Dieser Vorgang wiederholt sich. Die dabei auftretenden Achsbelastungen und Geräusche werden durch das Öffnen des Schubumluftventils vermieden, weil dann ein hoher Luftstrom im Kreis fließt. Wenn zu dem Zeitpunkt, zu dem das Schubumluftventil öffnen soll, ein pulsierender Luftmassenstrom von einem Luftmassenmesser in der Luftzufuhr der Brennkraftmaschine gemessen wird, dann wird der Fehler "Schubumluftventil öffnet nicht" gesetzt.

### Vorteile der Erfindung

Das erfindungsgemäße Verfahren zum Betreiben einer Brennkraftmaschine mit den Merkmalen des Hauptanspruchs hat demgegenüber den Vorteil, das in mindestens einem Betriebsbereich der Brennkraftmaschine mit einem defmiert aufgebauten Ladedruck das Bypassventil zumindest teilweise geöffnet wird und dass ein Fehler erkannt wird, wenn der Ladedruckabfall beim Öffnen des Bypassventils betragsmäßig unter einem vorgegebenen Schwellwert bleibt. Auf diese Weise lässt sich das Bypassventil ohne Kenntnis des Luftmassenstroms, insbesondere ohne Verwendung eines Luftmassenmessers, diagnostizieren.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn der Ladedruck in dem mindestens einen Betriebsbereich auf einen vorgegebenen Wert oberhalb eines abhängig von einer einzustellenden Ausgangsgröße der Brennkraftmaschine vorgegebenen Sollladedruckes erhöht wird und wenn die der Brennkraftmaschine zugeführte Luftmenge derart angedrosselt und/oder ein Zündwinkelwirkungsgrad derart verringert und/oder eine der Brennkraftmaschine zugeführte Kraftstoffmenge derart verringert wird, dass die einzustellende Ausgangsgröße eingehalten wird. Auf diese Weise lässt sich die beschriebene Diagnose besonders komfortabel durchführen und der Fahrer eines von der Brennkraftmaschine angetriebenen Kraftfahrzeugs spürt von der Diagnose nichts. Der Betrieb der Brennkraftmaschine kann somit auch während der Diagnose ohne Beeinträchtigung fortgeführt werden.

Ein weiterer Vorteil ergibt sich, wenn für den Fall, in dem kein Ladedruckabfall beim Öffnen des Bypassventils oder ein Ladedruckabfall auf einen Wert oberhalb des Sollladedruckes auftritt, nach einer vorgegebenen Zeit die Erhöhung des Ladedruckes und die Androsselung der zugeführten Luft und/oder die Verringerung des Zündwinkelwirkungsgrades und/oder die Verringerung der zugeführten Kraftstoffmenge zumindest teilweise wieder zurückgenommen wird. Auf diese Weise wird sichergestellt, dass auch bei einer Diagnose, bei der ein Fehler des Bypassventils erkannt wird, weil kein oder ein zu geringer Ladedruckeinbruch stattfindet, der Betrieb der Brennkraftmaschine wieder auf der Grundlage des dem einzustellenden Sollladedruck nachgeführten Istladedruckes möglichst wirkungsgradoptimal erfolgen kann.

Dies kann besonders komfortabel und ruckfrei dadurch geschehen, dass die Rücknahme der Erhöhung des Ladedruckes und der Androsselung der zugeführten Luft und/oder der Verringerung des Zündwinkelwirkungsgrades und/oder der Verringerung der zugeführten Kraftstoffmenge rampenförmig erfolgt.

Ein weiterer Vorteil ergibt sich, wenn die Auswirkung des beim Öffnen des Bypassventils auftretenden Ladedruckabfalls auf die Ausgangsgröße der Brennkraftmaschine durch eine Rücknahme der Androsselung der der Brennkraftmaschine zugeführten Luftmenge und/oder durch Erhöhung des Zündwinkelwirkungsgrades und/oder durch Erhöhung der der Brennkraftmaschine zugeführten Kraftstoffmenge reduziert, vorzugsweise kompensiert, wird. Auf diese Weise wird für den Fall, dass die Diagnose ein fehlerfrei arbeitendes Bypassventil ermittelt, sichergestellt, dass der Istladedruck auf dem Wert des einzustellenden Sollladedruckes gehalten werden kann und der Fahrer des von der Brennkraftmaschine angetriebenen Fahrzeugs von der Diagnose nichts spürt. Auf diese Weise wird die Diagnose komfortabel während des Betriebs der Brennkraftmaschine durchgeführt.

### Zeichnung

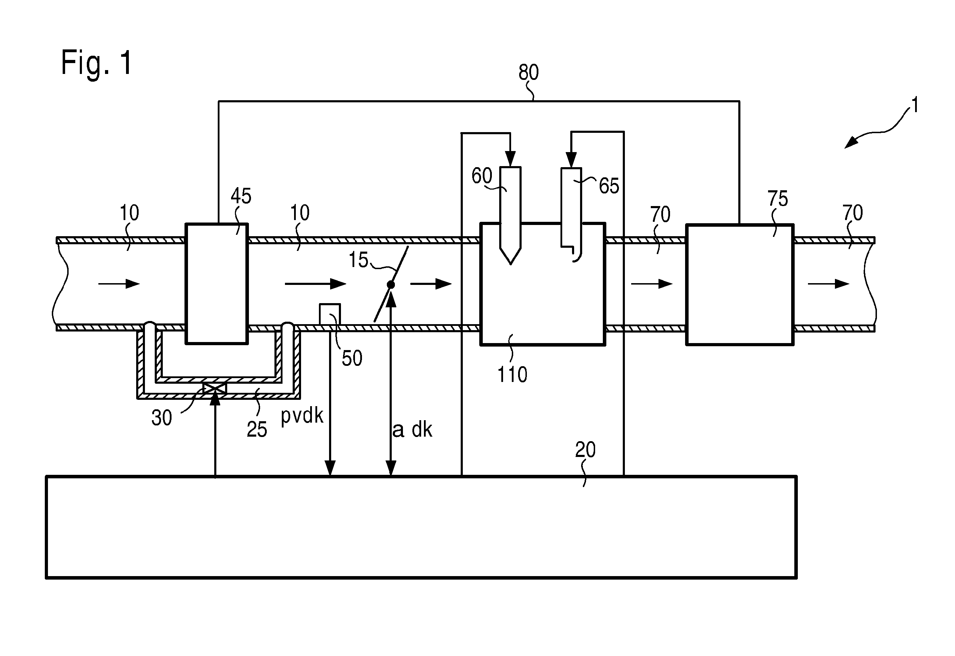

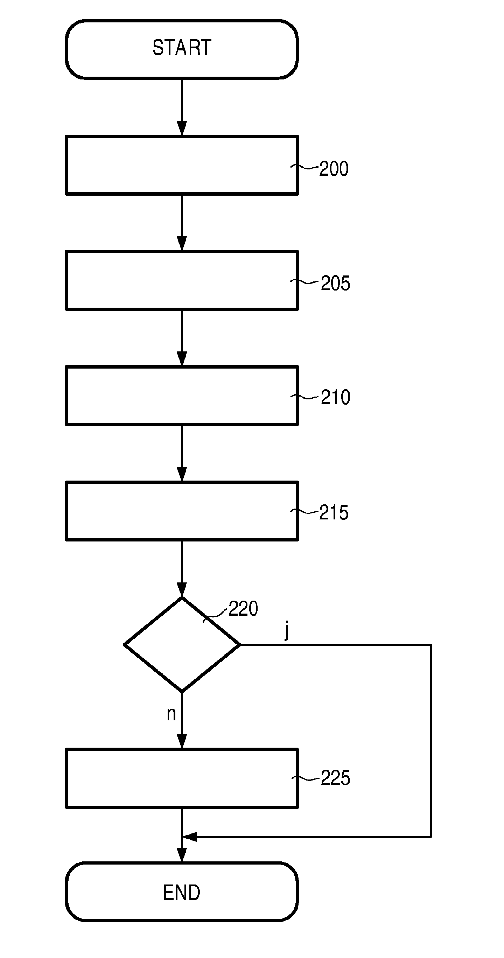

Ein Ausführungsbeispiel der Erfindung ist in der Zeichnung dargestellt und in der nachfolgenden Beschreibung näher erläutert. Es zeigen Figur 1 eine schematische Ansicht einer Brennkraftmaschine und Figur 2 einen Ablaufplan zur Verdeutlichung des erfindungsgemäßen Verfahrens.

### Beschreibung des Ausführungsbeispiels

In Figur 1 kennzeichnet 1 eine Brennkraftmaschine, die beispielsweise als Ottomotor oder als Dieselmotor ausgebildet sein kann. Im Folgenden soll beispielhaft angenommen werden, das die Brennkraftmaschine 1 als Ottomotor ausgebildet ist. Der Ottomotor 1 umfasst einen Zylinderblock 110 mit einem oder mehreren Zylindern, die jeweils einen Brennraum umfassen. Stellvertretend ist in Figur 1 der Brennraum eines Zylinders des Zylinderblocks 110 schematisch dargestellt. Diesem Brennraum wird über ein in Figur 1 nicht dargestelltes Einlassventil Frischluft von einem Luftzufuhrkanal 10, der im Folgenden auch als Luftzufuhr bezeichnet wird, zugeführt. Die Strömungsrichtung der Frischluft in der Luftzufuhr 10 ist dabei in Figur 1 durch Pfeile gekennzeichnet. In der Luftzufuhr 10 ist ein Verdichter 45 angeordnet, der die dem Ottomotor 1 zugeführte Frischluft verdichtet. Stromabwärts des Verdichters 45 ist in der Luftzufuhr 10 ein Drucksensor 50 angeordnet, der den Druck in der Luftzufuhr 10 misst und das Messergebnis an die Motorsteuerung 20 weiterleitet. Stromabwärts des Drucksensors 10 ist in der Luftzufuhr 10 ein leistungsstellendes Element 15, in diesem Beispiel als Drosselklappe ausgebildet, angeordnet. Somit erfasst der Drucksensor 50 den Druck in der Luftzufuhr 10 stromauf direkt vor der Drosselklappe 15. Die Drosselklappe 15 wiederum wird von der Motorsteuerung 20 angesteuert. Dabei soll im Folgenden beispielhaft angenommen werden, dass der Ottomotor 1 ein Fahrzeug antreibt, wobei ein Fahrer an einem in Figur 1 nicht dargestellten Fahrpedal einen Fahrerwunsch vorgeben kann, der von der Motorsteuerung 20 in einen Vorgabewert für den Öffnungsgrad der Drosselklappe 15 umgesetzt wird. Die Motorsteuerung 15 veranlasst dann die Drosselklappe 15 zur Einstellung dieses vorgegebenen Öffnungsgrades. Die dem Brennraum auf diese Weise zugeführte verdichtete und ggf. gedrosselte Frischluft wird über ein Einspritzventil 60 mit Kraftstoff vermischt. Dabei ist gemäß Figur 1 dargestellt, dass der Kraftstoff über das Einspritzventil 60 direkt in den Brennraum eingespritzt wird. Alternativ kann der Kraftstoff auch bereits in die Luftzufuhr 10 stromab oder stromauf der Drosselklappe 15 eingespritzt werden. Dabei wird das Einspritzventil 60 ebenfalls von der Motorsteuerung 20 angesteuert, beispielsweise um ein vorgegebenes Luft-/Kraftstoffgemischverhältnis einzuhalten. Das auf diese Weise gebildete Luft-/Kraftstoffgemisch wird von einer Zündkerze 65 gezündet. Auch die Zündkerze 65 kann von der Motorsteuerung 20 angesteuert werden, beispielsweise um einen geeigneten Zündzeitpunkt zu realisieren. Dieser kann beispielsweise im Hinblick auf eine einzustellende Momentenreserve oder im Hinblick auf das Aufheizen eines ggf. vorhandenen Katalysators im Abgasstrang des Ottomotors 1 vorgegeben sein. Das bei der Verbrennung des Luft-/Kraftstoffgemisches im Brennraum entstehende Abgas wird in einen Abgasstrang 70 ausgestoßen. Die Strömungsrichtung des Abgases im Abgasstrang 70 ist in Figur 1 ebenfalls durch Pfeile gekennzeichnet. Im Abgasstrang 70 ist gemäß Figur 1 eine Turbine 75 angeordnet, die vom Abgasmassenstrom im Abgasstrang 70 angetrieben wird. Die Turbine 75 treibt ihrerseits über eine Welle 80 den Verdichter 45 zur Verdichtung der dem Ottomotor 1 zuzuführenden Frischluft an. Der Verdichter 45, die Turbine 75 und die Welle 80 bilden in diesem Beispiel einen Abgasturbolader.

Der Doppelpfeil in Figur 1 zwischen der Drosselklappe 15 und der Motorsteuerung 20 deutet an, das auch eine Lagerückmeldung stattfindet, d. h. dass eine Messeinrichtung im Bereich der Drosselklappe 15, beispielsweise in Form eines Potentiometers, die Position der Drosselklappe 15 erfasst und an die Motorsteuerung 20 rückmeldet. Dieser Messwert wird auch als αdk bezeichnet. Der vom Drucksensor 50 stromauf der Drosselklappe 15 erfasste Druckwert wird als pvdk bezeichnet. Eine Ansteuerung eines Bypasses um die Turbine 75 des Abgasturboladers ist in Figur 1 aus Gründen der Übersichtlichkeit nicht dargestellt und kann in dem Fachmann bekannter Weise erfolgen.

Um den Verdichter 45 ist ein Bypasskanal 25 mit einem Bypassventil 30 angeordnet, das von der Motorsteuerung 20 angesteuert wird. Das Bypassventil 30 wird auch als Schubumluftventil bezeichnet. Eine Öffnung des Bypassventils 30 zur Vermeidung von Verdichterpumpen setzt normalerweise beim Schließen der Drosselklappe 15 ein. Dabei kann es vorgesehen sein, dass im Falle des Schließens der Drosselklappe 15 bei Erreichen einer vorgegebenen Position αdk0 der Drosselklappe 15, die einen vorgegebenen Öffnungsgrad der Drosselklappe 15 charakterisiert, die Motorsteuerung 20 das Bypassventil 30 zur Öffnung auf einen vorgegebenen Öffnungsgrad ansteuert. Dabei können unterschiedlichen Positionen der Drosselklappe 15 unterschiedliche Öffnungsgrade des Bypassventils 30 zugeordnet sein. Mit zunehmender Schließung der Drosselklappe 15 wird dabei das Bypassventil 30 weiter geöffnet. Es kann vorgesehen sein, dass das Bypassventil 30 für Positionen αdk größer einem vorgegebenem Schwellwert αdks vollständig geschlossen ist. Für Positionen αdk kleiner dem vorgegebenen Schwellwert αdks nimmt dann der Öffnungsgrad des Bypassventils 30 mit abnehmender Öffnung der Drosselklappe 15 zu. Der vorgegebene Schwellwert αdks kann dabei vorzugsweise der vorgegebenen Position αdk0 der Drosselklappe 15 entsprechen. Alternativ kann das Bypassventil 30 bei allen Positionen αdk kleiner dem vorgegebenen Schwellwert αdks vollständig geöffnet werden. Zur Diagnose des Bypassventils 30 ist es nun erfindungsgemäß vorgesehen, dass in mindestens einem Betriebsbereich der Brennkraftmaschine 1 mit einem definiert aufgebauten Ladedruck das Bypassventil 30 zumindest teilweise geöffnet wird, insbesondere vollständig, und ein Fehler erkannt wird, wenn der Ladedruckabfall beim Öffnen des Bypassventils 30 betragsmäßig unter einem vorgegebenen Schwellwert bleibt. Es wird also in einem Betriebsbereich der Brennkraftmaschine 1, in dem die Brennkraftmaschine 1 durch den Verdichter 45 aufgeladen ist, das Bypassventil 30 entweder vollständig oder zu einem Teil geöffnet und der mittels des Drucksensors 50 ermittelte Druck, der dem vom Verdichter 45 erzeugten Ladedruck entspricht, auf einen Ladedruckabfall hin ausgewertet. Der Ladedruckabfall ist dabei die Differenz zwischen dem Ladedruck, der vor dem zumindest teilweise Öffnen des Bypassventils 30 gemessen wurde und dem Ladedruck, der eine vorgegebene Zeit nach dem zumindest teilweisen Öffnen des Bypassventils 30 gemessen wurde. Weiterhin wird für die Diagnose vor dem zumindest teilweisen Öffnen des Bypassventils 30 der Ladedruck mittels des Verdichters 45 auf einen definierten, d. h. vorgegebenen Wert eingestellt. In der Motorsteuerung 20 ist dann für jeden für die Diagnose vorgesehenen Öffnungsgrad des Bypassventils 30 ausgehend von dem vorgegebenen Ladedruck ein zugeordneter Referenzladedruckabfall abgelegt, der beispielsweise auf einem Prüfstand bei fehlerfrei funktionierendem Bypassventil 30 ermittelt werden kann. Der nun während der Diagnose gemessene Ladedruckabfall bei Öffnen des Bypassventils 30 auf einen vorgegebenen Öffnungsgrad wird dann mit dem in der Motorsteuerung 20 für diesen vorgegebenen Öffnungsgrad des Bypassventils 30 zugeordnet abgelegten Referenzladedruckabfall verglichen, der einen vorgegebenen Schwellwert darstellt. Bleibt der gemessene Ladedruckabfall betragsmäßig unter dem vorgegebenen Schwellwert, so wird bei der Diagnose ein Fehler des Bypassventils 30 erkannt.

Damit die Diagnose möglichst komfortabel und für den Fahrer des von der Brennkraftmaschine 1 angetriebenen Fahrzeugs unbemerkt abläuft, kann es vorgesehen sein, dass der Ladedruck für die Diagnose auf einen vorgegebenen Wert oberhalb eines vorgegebenen Sollladedruckes erhöht wird. Der Sollladedruck wird dabei abhängig von einer einzustellenden Ausgangsgröße der Brennkraftmaschine 1, beispielsweise einem einzustellenden Drehmoment oder einer einzustellenden Leistung oder einer von dem einzustellenden Drehmoment und/oder der einzustellenden Leistung abgeleiteten Größe, derart in dem Fachmann bekannter Weise vorgegeben, dass die einzustellende Ausgangsgröße erreicht wird. Bei der einzustellenden Ausgangsgröße kann es sich insbesondere um ein abhängig vom Betätigungsgrad des Fahrpedals des von der Brennkraftmaschine 1 angetriebenen Fahrzeugs abgeleitetes Fahrerwunschmoment handeln. Durch die Erhöhung des Ladedruckes über den vorgegebenen Sollladedruck hinaus wird die Ausgangsgröße über den einzustellenden Wert hinaus erhöht, was in der Regel unerwünscht ist. Um den einzustellenden Wert der Ausgangsgröße, der im Folgenden auch als Sollwert für die Ausgangsgröße bezeichnet wird, einzuhalten, kann es deshalb vorgesehen sein, dass mit der Erhöhung des Ladedruckes über den Sollladedruck hinaus gleichzeitig die der Brennkraftmaschine 1 über die Luftzufuhr 10 zugeführte Luft durch Betätigen der Drosselklappe 15 in Schließrichtung stärker angedrosselt wird. Statt der Androsselung oder zusätzlich zur Androsselung der zugeführten Luft kann die Erhöhung des Ladedruckes über den Sollwert hinaus auch durch eine Verschlechterung des Zündwinkelwirkungsgrades im Hinblick auf die Einhaltung des Sollwertes für die einzustellende Ausgangsgröße kompensiert werden. Die Verschlechterung des Zündwinkelwirkungsgrades kann beispielsweise durch Spätverstellung des Zündwinkels erfolgen. Durch die Erhöhung des Ladedruckes über den vorgegebenen Sollladedruck hinaus und deren Kompensation im Hinblick auf die einzustellende Ausgangsgröße durch stärkere Androsselung der zuzuführenden Luft und/oder durch Verschlechterung des Zündwinkelwirkungsgrades entspricht letztlich dem Aufbau einer Reserve für die Ausgangsgröße, im Falle der Ausbildung der Ausgangsgröße als Drehmoment ergibt sich auf diese Weise eine Momentenreserve, die beim Öffnen des Bypassventils 30 abgerufen wird, um einen Einbruch der Ausgangsgröße zu vermeiden, vorausgesetzt das Bypassventil 30 funktioniert fehlerfrei. Die Verwendung der Zündwinkelwirkungsgradverschlechterung zum Aufbau der genannten Reserve für die Ausgangsgröße hat den Vorteil, dass sie den Ladedruckeinbruch beim Öffnen des Bypassventils 30 schneller abfangen kann als dies durch die Betätigung der Drosselklappe 15 in Öffnungsrichtung, also eine Entdrosselung der der Brennkraftmaschine 1 zugeführten Luft möglich ist. Für den Aufbau der beschriebenen Reserve kann es vorgesehen sein, dass in der Motorsteuerung 20 Kennfelder abgelegt sind, die beispielsweise auf einem Prüfstand ermittelt wurden und für den jeweiligen Betriebszustand der Brennkraftmaschine 1 angeben, um welchen Winkel die Drosselklappe 15 geschlossen und/oder der Zündwinkel verspätet werden muss, damit eine vorgegebene Erhöhung des Ladedrucks über den Sollladedruck hinaus in seiner Auswirkung auf die einzustellende Ausgangsgröße kompensiert werden kann.

Im Falle eines selbstzündenden Dieselmotors kann die Erhöhung des Ladedruckes über den Sollladedruck hinaus in entsprechender Weise durch Verringerung der der Brennkraftmaschine zugeführten Kraftstoffmenge im Hinblick auf die Einhaltung der einzustellenden Ausgangsgröße und zum Aufbau der genannten Reserve für die Ausgangsgröße kompensiert werden. Beim Dieselmotor wird über die Drosselklappe der Luftstrom nicht so stark gedrosselt. Deshalb tritt im Allgemeinen kein Pumpen auf.

Nach dem das System in der beschriebenen Weise durch Aufbau der Reserve für die Ausgangsgröße vorgespannt ist, wird das Bypassventil 30 aus dem vollständig geschlossenen Zustand zumindest teilweise geöffnet. Im Falle eines ordnungsgemäß funktionierenden Bypassventils 30 fällt der Ladedruck um einen Differenzwert ab, der vom Öffnungsgrad des Bypassventils 30 abhängt. Dieser Ladedruckabfall wird vom Drucksensor 50 ermittelt und an die Motorsteuerung 20 weitergeleitet. Abhängig vom auftretendem Ladedruckabfall veranlasst die Motorsteuerung 20 eine Betätigung der Drosselklappe 15 in Öffnungsrichtung und damit eine Entdrosselung der der Brennkraftmaschine 1 zugeführte Luft. Zusätzlich oder alternativ veranlasst die Motorsteuerung 20 eine Frühverstellung des Zündwinkels in Abhängigkeit des detektierten Ladedruckabfalls. Dabei können in der Motorsteuerung 20 wiederum Kennfelder abgelegt sein, die beispielsweise auf einem Prüfstand ermittelt wurden und angeben, um welchen Winkel die Drosselklappe 15 weiter geöffnet bzw. der Zündwinkel weiter nach Früh verstellt werden muss, um beim jeweiligen Betriebszustand der Brennkraftmaschine 1 den aufgetretenen Ladedruckabfall im Hinblick auf die Einhaltung der einzustellenden Ausgangsgröße der Brennkraftmaschine zu kompensieren. Durch Zündwinkelfrühverstellung ist dabei eine schnellere Kompensation des Ladedruckabfalls im Hinblick auf die Einhaltung der Ausgangsgröße möglich als dies durch Öffnung der Drosselklappe 15 der Fall ist. Dabei kann der Ladedruckabfall allein durch Öffnen der Drosselklappe 15 oder allein durch Frühverstellung des Zündwinkels oder durch Kombination der beiden Maßnahmen kompensiert werden. Im Falle des selbstzündenden Dieselmotors erfolgt die Kompensation des Ladedruckabfalls beispielsweise durch Erhöhung der der Brennkraftmaschine 1 zugeführten Kraftstoffmenge.

Auf diese Weise wird also beim Ladedruckabfall die aufgebaute Reserve für die einzustellende Ausgangsgröße abgerufen, so dass auch bei dem Ladedruckabfall die Ausgangsgröße eingehalten werden kann und der Fahrer des von der Brennkraftmaschine 1 angetriebenen Fahrzeugs von der abgelaufenen Diagnose nichts bemerkt. Ist allerdings der Ladedruckabfall so stark, dass er durch die beschriebenen Maßnahmen nicht mehr vollständig kompensiert werden kann, so wird er durch die beschriebenen Maßnahmen zumindest weitest möglich reduziert, wobei in diesem Fall der Ablauf der Diagnose für den Fahrer unter Umständen nicht ganz unbemerkt abläuft.

Ein Maß für die Einhaltung der Ausgangsgröße beim Aufbau und beim Abrufen der Reserve kann z. B. der Saugrohrdruck sein, der von einem in Figur 1 nicht dargestellten Saugrohrdrucksensor zwischen der Drosselklappe 15 und dem Zylinderblock 110 in der Luftzufuhr 10 ermittelt und an die Motorsteuerung 20 weitergeleitet werden kann. in Abhängigkeit der einzustellenden Ausgangsgröße kann ein einzustellender Saugrohrdruck, der im Folgenden auch als Sollsaugrohrdruck bezeichnet wird, vorgegeben werden. Wird der Aufbau und das Abrufen der Reserve für die Ausgangsgröße allein durch Betätigung der Drosselklappe 15 bewirkt, so kann beim Aufbau der Reserve, d. h. beim Erhöhen des Ladedrucks über den Sollladedruck hinaus die Drosselklappe 15 soweit geschlossen werden, dass der vorgegebene Sollsaugrohrdruck eingehalten wird. Beim Ladedruckabfall hingegen kann dann die Drosselklappe 15 soweit geöffnet werden, dass ebenfalls der berechnete und vorgegebene Sollsaugrohrdruck eingehalten werden kann. Dabei kann auch der Zusammenhang zwischen Ladedruckerhöhung und Winkel, um den die Drosselklappe 15 geschlossen werden muss bzw. Ladedruckabfall und Winkel, um den die Drosselklappe 15 geöffnet werden muss für den jeweiligen Betriebszustand im Hinblick auf die Einhaltung des vorgegebenen Sollsaugrohrdruckes jeweils in einer Kennlinie in der Motorsteuerung 20 abgelegt sein, die beispielsweise auf einem Prüfstand ermittelt wurden.

Nachdem die Reserve für die Ausgangsgröße beim Ladedruckabfall vollständig abgerufen wurde, wird die Diagnose beendet und das Bypassventil 30 wieder geschlossen und die einzustellende Ausgangsgröße in gewohnter Weise durch entsprechende Einstellung des Ladedrucks, der Drosselklappe und des Zündwinkels bzw. beim Dieselmotor durch die entsprechende Einstellung der Kraftstoffzufuhr umgesetzt.

Für die Diagnose selbst ist es vorgesehen, dass in einem Prüfbetrieb der Brennkraftmaschine 1, beispielsweise auf einem Prüfstand, unter Verwendung eines fehlerfrei funktionierenden Bypassventils für verschiedene Betriebszustände der Brennkraftmaschine 1 Kennfelder adaptiert werden, die für die verschiedenen Öffnungsgrade des Bypassventils 30 angeben, um welchen Wert der Ladedruck ausgehend von einem vorgegebenen Ladedruck abfällt, wenn das Bypassventil 30 ausgehend von seiner vollständig geschlossenen Stellung in den entsprechenden Öffnungsgrad durch Ansteuerung seitens der Motorsteuerung 20 verbracht wird. Bei dem beschriebenen Diagnosevorgang wird wie beschrieben der Ladedruck auf einen vorgegebenen Wert ausgehend vom Sollladedruck erhöht. Nach Aufbau der Reserve für die Ausgangsgröße wird dann das Bypassventil 30 auf einen vorgegebenen Öffnungsgrad geöffnet, so dass der Ladruck abfallen kann. Der vom Drucksensor 50 dabei ermittelte Ladedruckabfall wird mit dem in der Motorsteuerung 20 für diesen Fall erwarteten Ladedruckabfall verglichen. Der erwartete Ladedruckabfall entspricht einem vorgegebenen Schwellwert. Liegt der gemessene Ladedruckabfall betragsmäßig unter dem erwarteten Ladedruckabfall, dann wird ein Fehler des Bypassventils 30 erkannt. Andernfalls, d. h. wenn der gemessene Ladedruckabfall betragsmäßig mindestens dem erwarteten Ladedruckabfall entspricht, dann wird das Bypassventil 30 als fehlerfrei erkannt.

Im Fehlerfall, d. h. also wenn der Ladedruck bei der öffnenden Ansteuerung des Bypassventils 30 nach einer vorgegebenen Zeit nicht wie erwartet, also entweder gar nicht oder in zu geringem Ausmaß abfällt, wird die aufgebaute Reserve für die Ausgangsgröße gar nicht bzw. nicht vollständig abgerufen. In diesem Fall befindet sich der Ladedruck nach Ablauf der vorgegebenen Zeit seit der öffnenden Ansteuerung des Bypassventils 30 immer noch auf einem Wert oberhalb des Sollladedrucks. Die Diagnose ergibt ein fehlerhaftes Bypassventil. Der Diagnosemodus wird dann wieder verlassen, wobei die Brennkraftmaschine 1 wieder mit einem Ladedruck betrieben werden soll, der dem Sollladedruck entspricht. Deshalb muss der noch oberhalb des Sollladedrucks befindliche Ladedruck wieder auf den Sollladedruck zurückgenommen werden. Diese Zurücknahme des Ladedrucks kann in definierter Weise, beispielsweise rampenförmig erfolgen um sicherzustellen, dass der Fahrkomfort nicht beeinträchtigt wird. In entsprechender Weise wird dann die noch bestehende Reserve für die Ausgangsgröße abgebaut, d. h. die Drosselklappe 15 entsprechend weiter geöffnet und/oder der Zündwinkel entsprechend nach Früh verstellt, um die einzustellende Ausgangsgröße einzuhalten, so dass der Fahrer von dem Ladedruckabbau auf den Sollladedruck nichts bemerkt.

Im Falle des selbstzündenden Dieselmotors wird die Reserve für die Ausgangsgröße durch entsprechende Erhöhung der zugeführten Kraftstoffmenge abgebaut. Auch das Öffnen der Drosselkappe bzw. das Frühverstellen des Zündwinkels bzw. das Erhöhen der Kraftstoffzufuhr beim Abbau der Momentenreserve kann rampenförmig erfolgen, wobei allgemein die Zurücknahme des Ladedrucks und der Abbau der Reserve für die Ausgangsgröße wie auch für den Ladedruckabfall beschrieben kennfeldgesteuert so erfolgen kann, dass die einzustellende Ausgangsgröße eingehalten wird und keine Komforteinbuße für den Fahrer resultiert.

Es ist nicht erforderlich, dass wenn nach Abschluss der Diagnose der Ladedruck sich noch oberhalb des Sollladedruckes befmdet, der Ladedruck vollständig auf den Sollladedruck zurückgenommen wird und die Reserve für die Ausgangsgröße vollständig abgebaut wird. Vielmehr kann auch der Ladedruck gar nicht oder nur teilweise in Richtung Sollladedruck zurückgenommen und die Reserve für die Ausgangsgröße entsprechend gar nicht oder nur teilweise wieder abgebaut werden. Auf diese Weise bleibt eine Reserve für die Ausgangsgröße bestehen, die aus anderen Gründen als für die Diagnose des Bypassventils 30 gewünscht sein kann.

Gemäß Figur 2 wird das erfmdungsgemäße Verfahren anhand eines Ablaufplans nochmals verdeutlicht. Nach dem Start des Programms wird bei einem Programmpunkt 200 der Ladedruck auf einen vorgegebenen Wert ausgehend vom Sollladedruck erhöht und gleichzeitig in der beschriebenen Weise eine Reserve für die Ausgangsgröße der Brennkraftmaschine aufgebaut. Anschließend wird zu einem Programmpunkt 205 verzweigt.

Bei Programmpunkt 205 steuert die Motorsteuerung 20 das Bypassventil 30 an, um das Bypassventil 30 auf einen vorgegebenen Öffnungsgrad ausgehend vom geschlossenen Zustand des Bypassventils 30 zu öffnen. Anschließend wird zu einem Programmpunkt 210 verzweigt. Bei Programmpunkt 210 wird ein ggf. auftretender Ladedruckabfall vom Drucksensor 50 ermittelt und an die Motorsteuerung 20 weitergeleitet. Anschließend wird zu einem Programmpunkt 215 verzweigt.

Bei Programmpunkt 215 wird die Auswirkung des beim Öffnen des Bypassventils 30 ggf. auftretenden Ladedruckabfalls auf die Ausgangsgröße der Brennkraftmaschine 1 durch entsprechenden Abbau der Reserve für die Ausgangsgröße kompensiert oder zumindest reduziert wie beschrieben. Anschließend wird zu einem Programmpunkt 220 verzweigt.

Bei Programmpunkt 220 prüft die Motorsteuerung 20 nach Ablauf einer vorgegebenen Zeit seit der öffnenden Ansteuerung des Bypassventils 30, ob der vom Drucksensor 50 gemessene Ladedruckabfall betragsmäßig größer oder gleich dem erwarteten Ladedruckabfall ist. In diesem Fall wird ein fehlerfreies Bypassventil 30 erkannt und das Programm verlassen. Andernfalls wird ein fehlerhaftes Bypassventil 30 erkannt und der sich noch oberhalb des Sollladedrucks befindliche Ladedruck wie beschrieben zumindest teilweise in Richtung Sollladedruck zurückgenommen und gleichzeitig die noch bestehende Reserve für die Ausgangsgröße entsprechend reduziert. Bei fehlerhaftem Bypassventil 30 kann beispielsweise ein Warnsignal erzeugt oder eine Warnlampe aktiviert werden. Zusätzlich oder alternativ kann eine Notlaufmaßnahme der Brennkraftmaschine beispielsweise durch Zylinderausblendung eingeleitet, in letzter Konsequenz kann die Brennkraftmaschine 1 auch abgeschaltet werden. Alternativ kann der Ladedruck über ein in Figur 1 nicht dargestelltes Wastegate bei der Turbine 75 abgebaut werden. Anschließend wird das Programm verlassen.

Für den Aufbau und den Abbau der Reserve für die Ausgangsgröße wurde jeweils ein kennfeldgesteuerter bzw. ein kennliniengesteuerter Prozess beschrieben. Alternativ kann der Aufbau bzw. der Abbau der Reserve für die Ausgangsgröße auch durch eine Regelung auf einen konstanten Wert für die Ausgangsgröße der Brennkraftmaschine erfolgen. Wie bereits angedeutet kann für den Fall, dass die Reserve allein durch Betätigung der Drosselklappe 15 aufgebaut und abgebaut wird, die Regelung auch zur Einhaltung eines vorgegebenen Sollsaugrohrdruckes verwendet werden, um die Ausgangsgröße der Brennkraftmaschine 1 beim Erhöhen des Ladedrucks und beim Ladedruckabfall möglichst konstant zu halten.

Die Einstellung des gewünschten Ladedrucks kann beispielsweise mittels des in Figur 1 nicht dargestellten Bypasses um die Turbine 75 oder mit Hilfe einer variablen Turbinengeometrie in dem Fachmann bekannter Weise erfolgen. Der Ladedruck kann statt durch Druckmessung mittels des Drucksensors 50 auch durch Modellierung aus anderen Betriebsgrößen der Brennkraftmaschine 1 in dem Fachmann bekannter Weise ermittelt werden. Dasselbe gilt für die Ermittlung des Saugrohrdruckes.

Es kann optional vorgesehen sein, dass die beschriebene Diagnose nur gestartet wird, wenn der Sollladedruck oberhalb eines vorgegebenen Schwellwertes liegt. Der vorgegebene Schwellwert sollte dabei genügend über dem Umgebungsdruck liegen, damit der Messeffekt groß genug ist.

Prinzipiell ist es nicht erforderlich, dass für die Diagnose der Ladedruck ausgehend von einem Sollladedruck um einen vorgegebenen Wert erhöht wird. Ganz allgemein lässt sich das beschriebene Diagnoseverfahren durchführen, wenn der Ladedruck auf einen vorgegebenen Wert unabhängig von einem Sollladedruck eingestellt wird und dann das Bypassventils 30 wie beschrieben zumindest teilweise geöffnet wird und ein Fehler des Bypassventils 30 erkannt wird, wenn der Ladedruckabfall, der sich aufgrund dieser Öffnung des Bypassventils 30 aufgrund einer entsprechenden Ansteuerung des Bypassventils 30 ergibt, betragsmäßig unter dem wie beschrieben erwarteten Ladedruckabfall als vorgegebenem Schwellwert bleibt. Der Aufbau einer kompensierenden Reserve für die Ausgangsgröße der Brennkraftmaschine 1 und deren Abruf beim Auftreten des Ladedruckabfalls mit dem Ziel einer Einhaltung der einzustellenden Ausgangsgröße ist dabei nicht unbedingt erforderlich und dient lediglich dazu, dass der Fahrer eines von der Brennkraftmaschine 1 angetriebenen Fahrzeugs die Diagnose möglichst nicht bemerkt.

## Patentansprüche

1. Verfahren zum Betreiben einer Brennkraftmaschine (1) mit einem Verdichter (45) in einer Luftzufuhr (10) der Brennkraftmaschine (1) und einem Bypasskanal (25) um den Verdichter (45), wobei der Bypasskanal (25) ein Bypassventil (30) umfasst, **dadurch gekennzeichnet, dass** in mindestens einem Betriebsbereich der Brennkraftmaschine (1) mit einem defmiert aufgebauten Ladedruck das Bypassventil (30) zumindest teilweise geöffnet wird und dass ein Fehler erkannt wird, wenn der Ladedruckabfall beim Öffnen des Bypassventils (30) betragsmäßig unter einem vorgegebenen Schwellwert bleibt.

2. Verfahren nach Anspruch 1, **dadurch gekennzeichnet, dass** der Ladedruck in dem mindestens einen Betriebsbereich auf einen vorgegebenen Wert oberhalb eines abhängig von einer einzustellenden Ausgangsgröße der Brennkraftmaschine (1) vorgegebenen Sollladedruckes erhöht wird und dass die der Brennkraftmaschine (1) zugeführte Luft derart angedrosselt und/oder ein Zündwinkelwirkungsgrad derart verringert und/oder eine der Brennkraftmaschine (1) zugeführte Kraftstoffmenge derart verringert wird, dass die einzustellende Ausgangsgröße eingehalten wird.

3. Verfahren nach Anspruch 2, **dadurch gekennzeichnet, dass** für den Fall, in dem kein Ladedruckabfall beim Öffnen des Bypassventils (30) oder ein Ladedruckabfall auf einen Wert oberhalb des Sollladedruckes auftritt, nach einer vorgegebenen Zeit die Erhöhung des Ladedruckes und die Androsselung der zugeführten Luft und/oder die Verringerung des Zündwinkelwirkungsgrades und/oder die Verringerung der zugeführten Kraftstoffmenge zumindest teilweise wieder zurückgenommen wird.

4. Verfahren nach Anspruch 3, **dadurch gekennzeichnet, dass** die Rücknahme der Erhöhung des Ladedruckes und der Androsselung der zugeführten Luft und/oder der Verringerung des Zündwinkelwirkungsgrades und/oder der Verringerung der zugeführten Kraftstoffmenge rampenförmig erfolgt.

5. Verfahren nach einem der vorherigen Ansprüche, **dadurch gekennzeichnet, dass** die Auswirkung des beim Öffnen des Bypassventils (30) auftretenden Ladedruckabfalls auf die Ausgangsgröße der Brennkraftmaschine (1) durch eine Rücknahme der Androsselung der der Brennkraftmaschine (1) zugeführten Luftmenge und/oder durch Erhöhung des Zündwinkelwirkungsgrades und/oder durch Erhöhung der der Brennkraftmaschine (1) zugeführten Kraftstoffmenge reduziert, vorzugsweise kompensiert, wird.
